# EUROPEAN PATENT APPLICATION

(11) **EP 4 339 649 A1**
(43) Date of publication of application: **20.03.2024**
(21) Application number: 22807176.7
(22) Date of filing: 16.03.2022
(51) Int. Cl.: G01S 15/931

(54) **OBJECT DETECTION DEVICE**

(30) Priority: 13.05.2021 JP 2021081910
(71) Applicant: AISIN CORPORATION, Kariya-shi, Aichi 448-8650 (JP)
(72) Inventor: SUGAE, Ippei, Kariya-shi, Aichi 448-8650 (JP); WAKITA, Kosuke, Kariya-shi, Aichi 448-8650 (JP)
(74) Representative: TBK
(86) International application number: PCT/JP2022/012030
(87) International publication number: WO 2022/239470

(57) **Abstract**

An object detection device includes: an acquisition unit configured to acquire distance information indicating a distance from a predetermined portion to an object based on an intensity of a reflected wave generated by an ultrasonic wave being reflected by the object; and a generation unit configured to generate step information indicating a height of the object based on a pair of pieces of distance information detected within a predetermined time interval. The pair of pieces of distance information include first distance information corresponding to a distance from the predetermined portion to an upper end portion of the object and second distance information corresponding to a distance from the predetermined portion to a lower end portion of the object.

## Description

### Technical Field

This disclosure relates to an object detection device.

### Background Art

In a vehicle control system or the like, an object detection device which detects an object present around a vehicle by transmitting and receiving ultrasonic waves is used. In such an object detection device, a technique for distinguishing between an obstacle to be avoided and a low step which does not need to be avoided is used.

Examples of the related art include Japanese Patent No. 6026948 (Reference 1).

One of the problems to be solved by this disclosure is to provide an object detection device which can estimate a height of an object using ultrasonic waves.

### Summary of Invention

### Solution to Problem

An object detection device as an example of this disclosure includes: an acquisition unit configured to acquire distance information indicating a distance from a predetermined portion to an object based on an intensity of a reflected wave generated by an ultrasonic wave being reflected by the object; and a generation unit configured to generate step information indicating a height of the object based on a pair of pieces of the distance information detected within a predetermined time interval.

According to the above configuration, the height of the object can be estimated using ultrasonic waves.

The pair of pieces of distance information may include first distance information corresponding to a distance from the predetermined portion to an upper end portion of the object and second distance information corresponding to a distance from the predetermined portion to a lower end portion of the object.

When an ultrasonic wave is transmitted toward an object, an intensity of a reflected wave corresponding to the upper end portion of the object and an intensity of a reflected wave corresponding to the lower end portion of the object may appear relatively strongly. By using such reflection characteristics of the ultrasonic wave, the height of the object can be estimated with high accuracy.

The generation unit generates, based on the first distance information, the second distance information, and an installation height indicating a height of a transmission and reception unit which transmits and receives ultrasonic waves from a road surface, the step information indicating a height of the object smaller than the installation height.

Accordingly, the height of the object smaller than the installation height of the transmission and reception unit can be estimated with high accuracy.

The acquisition unit may acquire the pair of pieces of distance information based on the reflected wave received by one reception unit.

Accordingly, accuracy of the pair of pieces of distance information can be improved.

The pair of pieces of distance information may include the distance information corresponding to a peak at which the intensity of the reflected wave within the time interval exceeds a threshold value.

Accordingly, it is possible to freely select a pair of pieces of distance information by setting the threshold value.

The generation unit may calculate a third distance from a contact point between a road surface and a perpendicular extending in a vertical direction from the transmission and reception unit to the lower end portion of the object based on a second distance indicated by the second distance information and the installation height, may calculate a height difference between the upper end portion of the object and the transmission and reception unit based on a first distance indicated by the first distance information and the third distance, and may calculate a height of the object based on a difference between the installation height and the height difference.

Accordingly, the height of the object can be calculated with high accuracy.

### Brief Description of Drawings

[FIG. 1] FIG. 1 is a top view showing an example of a configuration of a vehicle according to an embodiment;
[FIG. 2] FIG. 2 is a block diagram showing an example of a configuration of a vehicle control device according to the embodiment;
[FIG. 3] FIG. 3 is a block diagram showing an example of a function configuration of an object detection device according to the embodiment;
[FIG. 4] FIG. 4 is a diagram showing an example of a method for acquiring distance information based on echo information in the embodiment;
[FIG. 5] FIG. 5 is a diagram showing an example of a status when calculating a height of an object in the embodiment;
[FIG. 6] FIG. 6 is a diagram showing an example of echo information corresponding to the status shown in FIG. 5 in the embodiment; and
[FIG. 7] FIG. 7 is a flowchart showing an example of processing in the object detection device according to the embodiment.

### Description of Embodiments

Hereinafter, an embodiment disclosed here will be described with reference to the drawings. Configurations of the embodiment described below and functions and effects provided by the configurations are merely examples, and this disclosure is not limited to the following description.

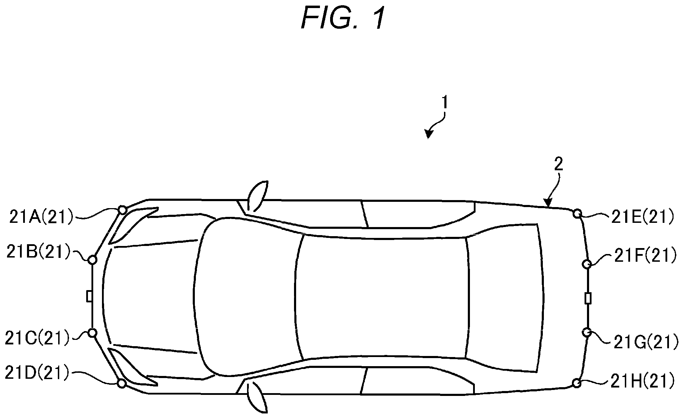

FIG. 1 is a top view showing an example of a configuration of a vehicle 1 according to the embodiment. The vehicle 1 is an example of a moving body on which an object detection device according to the present embodiment is mounted. The object detection device according to the present embodiment is a device which detects an object (another vehicle, a structure, a pedestrian, a road surface, or the like) present around the vehicle 1 based on time of flight (TOF), Doppler shift information or the like acquired by transmitting an ultrasonic wave from the vehicle 1 and receiving a reflected wave from the object.

The object detection device according to the present embodiment includes a plurality of transmission and reception units 21A to 21H (hereinafter, abbreviated as a transmission and reception unit 21 when it is not necessary to distinguish between the plurality of transmission and reception units 21A to 21H). Each transmission and reception unit 21 is installed on a vehicle body 2 as an exterior of the vehicle 1, transmits an ultrasonic wave (transmitted wave) toward an outside of the vehicle body 2, and receives a reflected wave from an object present outside the vehicle body 2. In the example shown in FIG. 1, four transmission and reception units 21A to 21D are disposed at front end portions of the vehicle body 2, and four transmission and reception units 21E to 21H are disposed at rear end portions. The number and installation positions of the transmission and reception units 21 are not limited to the above example.

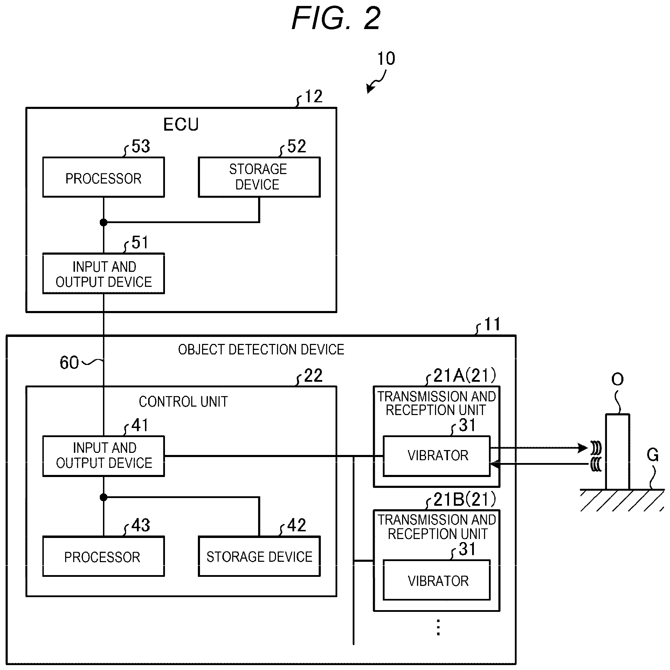

FIG. 2 is a block diagram showing an example of a configuration of a vehicle control device 10 according to the embodiment. The vehicle control device 10 includes an object detection device 11 and an ECU 12. The vehicle control device 10 performs processing for controlling the vehicle 1 based on information output from the object detection device 11.

The object detection device 11 includes the plurality of the transmission and reception units 21 and a control unit 22. Each of the transmission and reception units 21 includes a vibrator 31 implemented using a piezoelectric element or the like, an amplifier, and the like, and implements transmission and reception of ultrasonic waves by vibration of the vibrator 31. Specifically, the transmission and reception unit 21 transmits an ultrasonic wave generated in response to the vibration of the vibrator 31 as a transmitted wave, and detects the vibration of the vibrator 31 caused by a reflected wave of the transmitted wave being reflected by an object. The object includes a target O with which the vehicle 1 is to avoid contact, a road surface G on which the vehicle 1 travels, and the like. The vibration of the vibrator 31 is converted into an electric signal, and echo information indicating a change over time in an intensity (an amplitude) of the reflected wave from the object can be acquired based on the electric signal. Distance information such as the TOF or the like corresponding to a distance from the transmission and reception unit 21 (the vehicle body 2) to the object can be acquired based on the echo information.

The echo information may be generated based on data acquired by one transmission and reception unit 21, and may be generated based on a plurality of pieces of data respectively acquired by the plurality of transmission and reception units 21. For example, the echo information on an object present in front of the vehicle body 2 may be generated based on two or more pieces of data (for example, an average value) acquired by two or more of the four transmission and reception units 21A to 21D disposed at front parts of the vehicle body 2 (see FIG. 1). Similarly, the echo information on an object present behind the vehicle body 2 may be generated based on two or more pieces of data acquired by two or more of the four transmission and reception units 21E to 21H disposed at rear parts of the vehicle body 2 (see FIG. 1).

In the example shown in FIG. 2, a configuration is shown in which both transmission of a transmitted wave and reception of a reflected wave are performed by using the single vibrator 31, but a configuration of the transmission and reception unit 21 is not limited to this. For example, a configuration in which a transmission unit which transmits a transmitted wave and a reception unit which receives a reflected wave are separated from each other, such as a configuration in which a vibrator for transmitting a transmitted wave and a vibrator for receiving a reflected wave are separately provided, may be used.

The control unit 22 includes an input and output device 41, a storage device 42, and a processor 43. The input and output device 41 is an interface device for performing data transfer between the control unit 22 and an outside (the transmission and reception unit 21, the ECU 12, and the like). The storage device 42 includes a main storage device such as a read only memory (ROM) or a random access memory (RAM), and an auxiliary storage device such as a hard disk drive (HDD) or a solid state drive (SSD). The processor 43 is an integrated circuit which executes various types of processing for implementing a function of the control unit 22, and may be implemented by using, for example, a central processing unit (CPU) which operates according to a program, and an application specific integrated circuit (ASIC) designed for a specific application. The processor 43 executes various types of arithmetic processing and control processing by reading and executing a program stored in the storage device 42.

The ECU 12 is a unit which executes various types of processing for controlling the vehicle 1 based on various types of information acquired from the object detection device 11 or the like. The ECU 12 includes an input and output device 51, a storage device 52, and a processor 53. The input and output device 51 is an interface device for performing data transfer between the ECU 12 and an external mechanism (the object detection device 11, a drive mechanism, a brake mechanism, a steering mechanism, a transmission mechanism, an in-vehicle display, a speaker, and the like). The storage device 52 includes a main storage device such as a ROM and a RAM, and an auxiliary storage device such as an HDD and an SSD. The processor 53 is an integrated circuit which executes various types of processing for implementing a function of the ECU 12, and may be implemented using, for example, a CPU and an ASIC. The processor 53 executes various types of arithmetic processing and control processing by reading a program stored in the storage device 52.

The input and output device 41 of the object detection device 11 and the input and output device 51 of the ECU 12 are connected via a bus 60 conforming to a predetermined standard such as a controller area network (CAN).

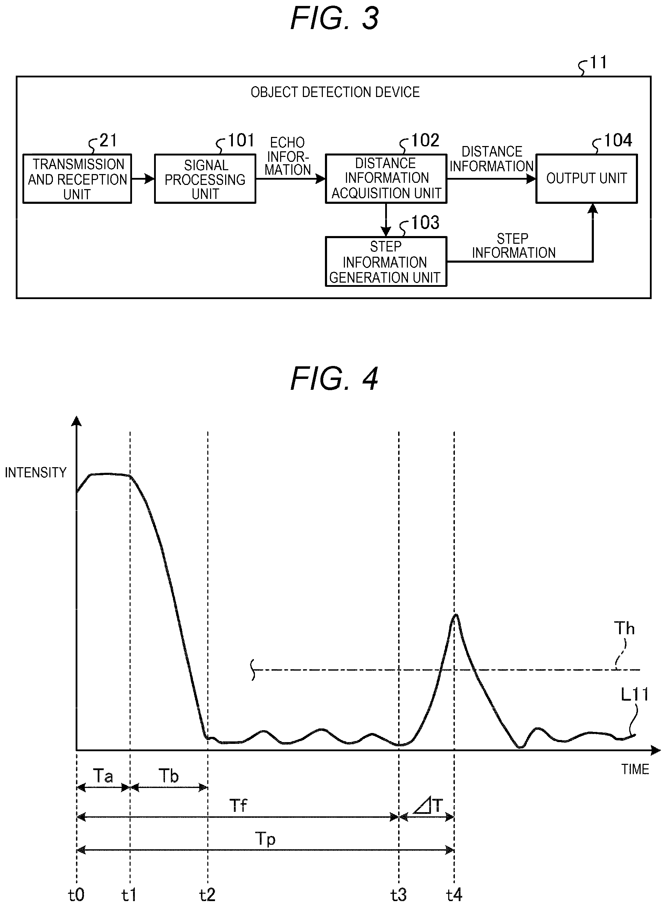

FIG. 3 is a block diagram showing an example of a function configuration of the object detection device 11 according to the embodiment. The object detection device 11 according to the present embodiment includes a signal processing unit 101, a distance information acquisition unit 102 (acquisition unit), a step information generation unit 103 (generation unit), and an output unit 104. The functional components 101 to 104 are implemented by cooperation of hardware components of the object detection device 11 as shown in FIG. 2 and software components such as a program stored in the storage device 42.

The signal processing unit 101 performs predetermined processing on data (such as a vibration amount of the vibrator 31) acquired by the transmission and reception unit 21, and generates echo information indicating a change over time in an intensity of the reflected wave. The predetermined processing is, for example, amplification processing, filter processing, or envelope processing for an electric signal corresponding to vibration of the vibrator 31.

The distance information acquisition unit 102 acquires distance information (for example, TOF) indicating a distance from an installation position (an example of a predetermined portion) of the transmission and reception unit 21 to an object (target 0) present around the vehicle 1 based on the echo information generated by the signal processing unit 101. The distance information acquisition unit 102 acquires, for example, TOF corresponding to a timing (peak) at which the intensity of the reflected wave from the object exceeds a threshold value.

The step information generation unit 103 generates step information indicating a height of an object present around the vehicle 1 based on the distance information acquired by the distance information acquisition unit 102. The step information generation unit 103 according to the present embodiment calculates the height of the object based on a pair of pieces of distance information detected within a predetermined time interval. A method for calculating the height of the object will be described later.

The output unit 104 outputs the distance information acquired by the distance information acquisition unit 102 and the step information generated by the step information generation unit 104 to the ECU 12 or the like.

FIG. 4 is a diagram showing an example of a method for acquiring the distance information based on the echo information in the embodiment. FIG. 4 shows an envelope L11 (an example of the echo information) indicating a change over time in the intensity of the reflected wave. In a graph shown in FIG. 4, a horizontal axis corresponds to a time (TOF), and a vertical axis corresponds to an intensity of an ultrasonic wave (the vibration amount of the vibrator 31) transmitted and received by the transmission and reception unit 21.

It can be seen from the envelope L11 that the vibrator 31 is driven and vibrates from a timing t0 for a time Ta, so that transmission of a transmitted wave is completed at a timing t1, and then vibration of the vibrator 31 due to inertia continues while being attenuated during a time Tb until a timing t2. Therefore, in the graph shown in FIG. 4, the time Tb corresponds to a so-called reverberation time.

The envelope L11 reaches a peak at which a magnitude of the vibration of the vibrator 31 becomes equal to or larger than a predetermined threshold value Th at a timing t4 at which a time Tp has elapsed from the timing t0 at which the transmission of the transmitted wave is started. The threshold value Th is a value which is preset to identify whether the vibration of the vibrator 31 is caused by reception of a reflected wave from the target O (another vehicle, a structure, a pedestrian or the like), or whether the vibration is caused by reception of a reflected wave from an object other than the target O (for example, the road surface G). Although the threshold value Th is shown as a constant value here, the threshold value Th may be a variable value which changes according to passage of time, a status, or the like. Vibration having a peak equal to or larger than the threshold value Th can be considered to be caused by reception of a reflected wave from the target O.

In the envelope L11, the vibration of the vibrator 31 is attenuated after the timing t4. Therefore, the timing t4 corresponds to a timing at which the reception of the reflected wave from the target O is completed, that is, a timing at which the transmitted wave last transmitted at the timing t1 returns as a reflected wave.

In the envelope L11, a timing t3 as a start point of the peak at the timing t4 corresponds to a timing at which reception of the reflected wave from the target O starts, that is, a timing at which the transmitted wave first transmitted at the timing t0 returns as the reflected wave. Therefore, a time ΔT between the timing t3 and the timing t4 is equal to the time Ta as a transmission time of the transmitted wave.

Based on the above description, in order to obtain a distance to the target O by using the TOF, it is necessary to obtain a time Tf between the timing t0 at which the transmitted wave starts to be transmitted and the timing t3 at which the reflected wave starts to be received. The time Tf is the TOF corresponding to a distance from the installation position of the transmission and reception unit 21 to the target O. The time Tf can be obtained by subtracting the time ΔT equal to the time Ta as the transmission time of the transmitted wave from the time Tp as a difference between the timing t0 and the timing t4 at which the intensity of the reflected wave exceeds the threshold value Th and reaches the peak.

The timing t0 when the transmitted wave starts to be transmitted can be easily specified as a timing when the object detection device 11 starts to operate, and the time Ta as the transmission time of the transmitted wave is predetermined by a setting or the like. Therefore, the time Tf can be calculated by specifying the timing t4 at which the intensity of the reflected wave becomes equal to or larger than the threshold value Th and reaches a peak, and a distance from the transmission and reception unit 21 to the target O can be calculated. The distance information acquisition unit 102 acquires object information (TOF) related to the target O by, for example, the above method.

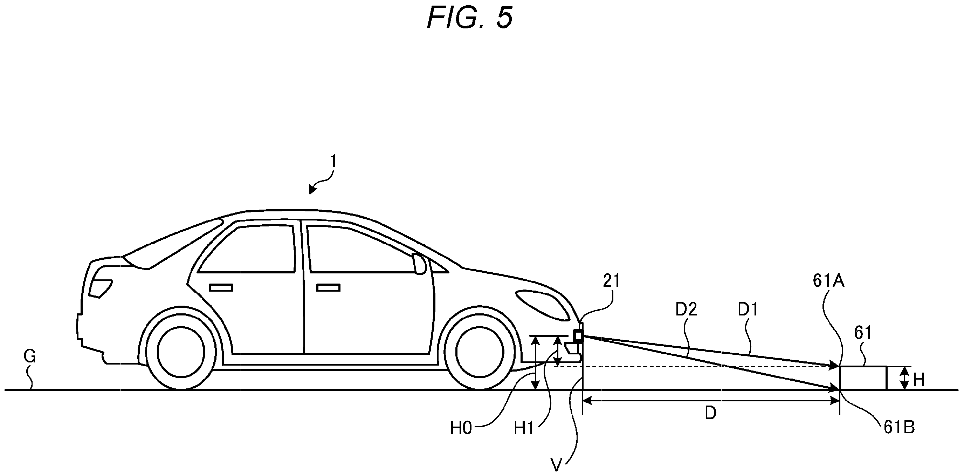

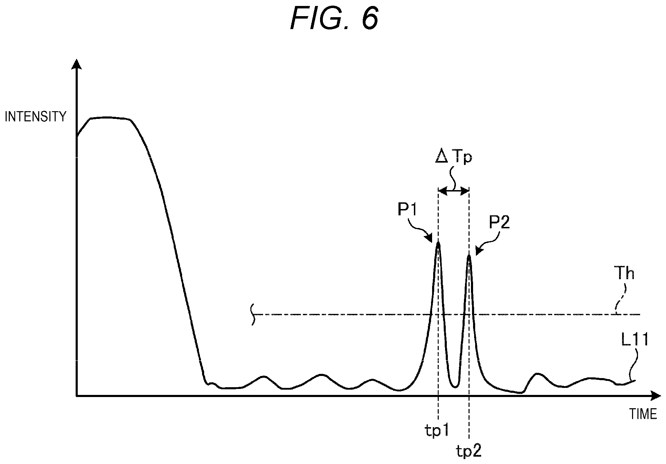

Hereinafter, a function of the step information generation unit 104 according to the present embodiment will be described. FIG. 5 is a diagram showing an example of a status when calculating a height H of an object 61 in the embodiment. FIG. 6 is a diagram showing an example of echo information corresponding to the status shown in FIG. 5 in the embodiment.

FIG. 5 shows a status in which the height H of the object 61 present in front of the vehicle 1 from the road surface G is calculated. The height H of the object 61 shown here is smaller than an installation height H0 of the transmission and reception unit 21. The installation height H0 is a height of the transmission and reception unit 21 from the road surface G to a predetermined position (for example, a center of a diaphragm), and is an understood value.

When a reception unit of the transmission and reception unit 21 receives a reflected wave generated by an ultrasonic wave transmitted from a transmission unit of the transmission and reception unit 21 being reflected by the object 61 having the height H smaller than the installation height H0, two peaks P1 and P2 at which the intensity of the reflected wave exceeds the threshold value Th appear close to each other on a time axis as shown in FIG. 6. If a time difference ΔTp between a time point tp1 at which the first peak P1 is detected and a time point tp2 at which the second peak P2 is detected is equal to or less than a predetermined time interval Ts, both the peaks P1 and P2 can be estimated to correspond to one object 61. Two pieces of distance information (TOFs) corresponding to both the peaks P1 and P2 are treated as a pair of pieces of distance information. That is, the pair of pieces of distance information include distance information corresponding to a peak at which the intensity of the reflected wave within the predetermined time interval Ts exceeds the threshold value Th. The intensity of the reflected wave can also be detected by using diffraction of a wave generated when the ultrasonic wave (transmitted wave) is reflected by a corner of the object 61. Accordingly, the pair of pieces of distance information can be acquired based on the reflected wave received by the one reception unit. Thus, when the installation height is calculated based on the distance information, by using the reflected wave received by the one reception unit, a pair of pieces of distance information can be acquired with one piece of data, and thus it is possible to improve a speed of arithmetic processing by the step information generation unit 103.

The first peak P1 corresponds to an upper end portion 61A (see FIG. 5) of the object 61 on a surface at a vehicle 1 side. The second peak P2 corresponds to a lower end portion 61B of the object 61 on a surface at the vehicle 1 side. That is, a distance D1 (an example of a first distance) from the transmission and reception unit 21 to the upper end portion 61A can be calculated based on TOF (first distance information) calculated based on the time point tp1 at which the first peak P1 is detected. A distance D2 (an example of a second distance) from the transmission and reception unit 21 to the lower end portion 61B can be calculated based on TOF (second distance information) calculated based on the time point tp2 at which the second peak P2 is detected.

Based on the distance D2 and the installation height H0, a distance D (an example of a third distance) from a contact point between the road surface G and a perpendicular V extending in a vertical direction from the installation position of the transmission and reception unit 21 to the object 61 can be calculated. A height difference H1 between the upper end portion 61A of the object 61 and the transmission and reception unit 21 can be calculated based on the distance D1 and the distance D. The height H of the object 61 can be calculated based on H = H0 - H1. The step information generation unit 103 according to the present embodiment calculates the height H of the object 61 by, for example, the above method, and generates step information indicating the height H.

In the above description, the height H of the object 61 present in front of the vehicle 1 is calculated, and a height of an object present behind the vehicle 1 can be calculated in the same manner as described above.

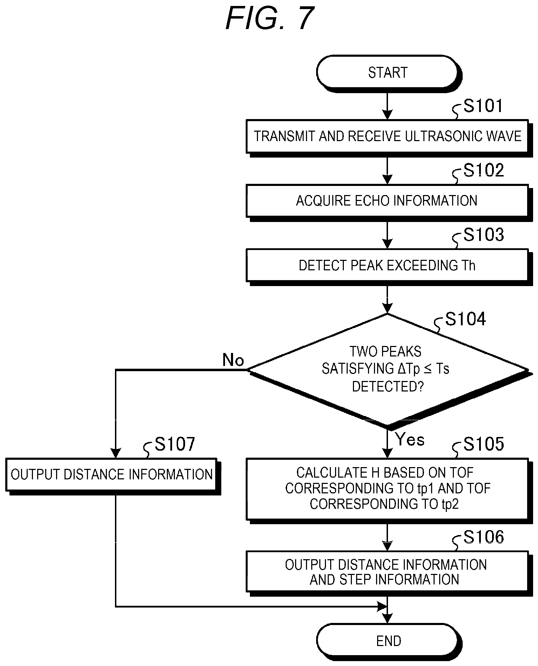

FIG. 7 is a flowchart showing an example of processing in the object detection device 11 according to the embodiment. When the transmission and reception unit 21 transmits and receives an ultrasonic wave (S101), the signal processing unit 101 acquires echo information based on data acquired by the transmission and reception unit 21 (S102). The distance information acquisition unit 102 detects a peak exceeding the threshold value Th based on the echo information (S103).

The step information generation unit 103 determines whether the two peaks P1 and P2 at which the time difference ΔTp is equal to or less than the time interval Ts are detected based on a detection result by the distance information acquisition unit 102 (S104). If the two peaks P1 and P2 at which the time difference ΔTp is equal to or less than the time interval Ts are detected (S104: Yes), the step information generation unit 103 calculates the height H of the object 61 as described above based on TOF corresponding to the time point tp1 at which the first peak P1 is detected and TOF corresponding to the time point tp2 at which the second peak P2 is detected (S105). The output unit 104 outputs the distance information acquired by the distance information acquisition unit 102 and the step information generated by the step information generation unit 103 to the ECU 12 or the like (S106). On the other hand, if the two peaks P1 and P2 at which the time difference ΔTp is equal to or less than the time interval Ts are not detected (S104: No), the output unit 104 outputs only the distance information acquired by the distance information acquisition unit 102 to the ECU 12 or the like (S107).

A program for causing a computer (for example, the processor 43 of the control unit 22) to execute processing for implementing various functions in the above embodiment can be provided by being recorded as an installable or executable format file in a computer-readable recording medium such as a CD (compact disc)-ROM, a flexible disc (FD), a CD-R (recordable), or a digital versatile disk (DVD). The program may be provided or distributed via a network such as the Internet.

According to the above embodiment, it is possible to detect presence of the object 61 using ultrasonic waves and estimate the height H of the object 61. Based on the estimated height H of the object 61, it is possible to determine whether the object 61 can be climbed over or is to be avoided. Accordingly, it is possible to improve controllability in automatic traveling (for example, automatic parking) of the vehicle 1.

Although the embodiment of this disclosure has been described, the embodiment described above and modifications thereof have been presented by way of example only, and are not intended to limit the scope of the inventions. The novel embodiment and the modifications thereof described above can be implemented in a variety of forms; and various omissions, substitutions, and changes can be made without departing from the gist of the inventions. The embodiment and modifications thereof described above are in the scope and gist of the invention, and are also in the inventions described in the claims and their equivalents.

### Reference Signs List

1: vehicle
2: vehicle body
10: vehicle control device
11: object detection device
12: ECU
21, 21A to 21H: transmission and reception unit
22: control unit
31: vibrator
41: input and output device
42: storage device
43: processor
51: input and output device
52: storage device
53: processor
60: bus
61: object
101: signal processing unit
102: distance information acquisition unit
103: step information generation unit
104: output unit
G: road surface
O: target

## Claims

1. An object detection device comprising:
an acquisition unit configured to acquire distance information indicating a distance from a predetermined portion to an object based on an intensity of a reflected wave generated by an ultrasonic wave being reflected by the object; and
a generation unit configured to generate step information indicating a height of the object based on a pair of pieces of the distance information detected within a predetermined time interval.

2. The object detection device according to claim 1, wherein
the pair of pieces of distance information include first distance information corresponding to a distance from the predetermined portion to an upper end portion of the object and second distance information corresponding to a distance from the predetermined portion to a lower end portion of the object.

3. The object detection device according to claim 2, wherein
the generation unit generates, based on the first distance information, the second distance information, and an installation height indicating a height of a transmission and reception unit which transmits and receives ultrasonic waves from a road surface, the step information indicating a height of the object smaller than the installation height.

4. The object detection device according to any one of claims 1 to 3, wherein
the acquisition unit acquires the pair of pieces of distance information based on the reflected wave received by one reception unit.

5. The object detection device according to any one of claims 1 to 4, wherein
the pair of pieces of distance information include the distance information corresponding to a peak at which the intensity of the reflected wave within the time interval exceeds a threshold value.

6. The object detection device according to claim 3, wherein
the generation unit calculates a third distance from a contact point between a road surface and a perpendicular extending in a vertical direction from the transmission and reception unit to the lower end portion of the object based on a second distance indicated by the second distance information and the installation height, calculates a height difference between the upper end portion of the object and the transmission and reception unit based on a first distance indicated by the first distance information and the third distance, and calculates a height of the object based on a difference between the installation height and the height difference.
